# EUROPÄISCHE PATENTSCHRIFT

(11) **EP 4 204 761 B1**
(45) Veröffentlichungstag und Bekanntmachung des Hinweises auf die Patenterteilung: **07.08.2024**
(21) Anmeldenummer: 21769937.0
(22) Anmeldetag: 26.08.2021
(51) Int. Cl.: G01B 11/275

(54) **MESSKOPF ZUR KRAFTFAHRZEUGVERMESSUNG**
MEASURING HEAD FOR VEHICLE MEASUREMENT
TÊTE DE MESURE POUR MESURE DE VÉHICULE

(30) Priorität: 28.08.2020 DE 102020122568
(43) Veröffentlichungstag der Anmeldung: 05.07.2023
(73) Patentinhaber: Beissbarth Automotive Testing Solutions GmbH, 80993 München (DE)
(72) Erfinder: RAMAIAH, Ashok, 80993 München (DE); KUMAR, Indrajit, 80993 München (DE); HODISSEN, Sven, 80993 München (DE)
(74) Vertreter: Schmitt-Nilson Schraud Waibel Wohlfrom Patentanwälte Partnerschaft mbB
(86) Internationale Anmeldenummer: PCT/EP2021/073603
(87) Internationale Veröffentlichungsnummer: WO 2022/043433

(56) Entgegenhaltungen:
- JP-A- H0 526 633
- US-A1- 2009 073 425
- US-B2- 10 473 458

## Beschreibung

Die vorliegende Erfindung betrifft einen Messkopf für die optische Vermessung und/oder Kalibrierung einer Kraftfahrzeugkomponente, insbesondere eines Fahrwerks eines Kraftfahrzeugs. Die Erfindung betrifft auch Vorrichtung und ein Verfahren zur optischen Vermessung und/oder Kalibrierung einer Kraftfahrzeugkomponente unter Verwendung eines erfindungsgemäß ausgebildeten Messkopfes.

Zur optischen Vermessung und/oder Kalibrierung einer Kraftfahrzeugkomponente, insbesondere eines Fahrwerks eines Kraftfahrzeugs, kommen regelmäßig Messköpfe zum Einsatz, die Bilder von an den Rädern des Kraftfahrzeugs angebrachten Messtafeln aufnehmen. Auf den Messtafeln befinden sich optische Messmarken, die üblicherweise ein Messmarkenmuster bilden. So können beispielsweise relevante Parameter des Fahrwerks des Kraftfahrzeugs, z.B. Sturz-, Spur- oder Felgenschlagwerte, bestimmt werden.

US 2009/073425 A1 offenbart eine Messvorrichtung zur Fahrzeugvermessung mit einer Bildaufnahmevorrichtung zur Aufnahme von Bildern wenigstens einer an einem Rad eines zu vermessenden Kraftfahrzeugs angebrachten Messtafel und einer in einer Seitenfläche der Messvorrichtung ausgebildete Anzeigevorrichtung, die dazu ausgebildet ist, aktuelle Messdaten des Messkopfes und/oder Anweisungen an einen Benutzer anzuzeigen.

Ähnliche Messvorrichtungen sind in den Dokumenten JP H05 26633 A und US 10 473 458 B2 offenbart.

Weichen die gemessenen Parameter des Kraftfahrzeugs (Messwerte) von vorgegebenen Sollwerten ab, müssen die Fahrwerkseinstellungen korrigiert werden. Dies kann in der Regel nur von einer Position an einem Rad oder unterhalb des Kraftfahrzeugs erfolgen. Um die Parameter des Kraftfahrzeugs, insbesondere des Fahrwerks, schnell, bequem und zuverlässig einstellen zu können, ist es vorteilhaft, wenn die von den Messköpfen bestimmten Messwerte während des Einstellvorgangs, d.h. von einer Position an einem Rad oder unterhalb des Kraftfahrzeugs, abgelesen werden können.

Es ist daher eine Aufgabe der vorliegenden Erfindung, einen Messkopf für die optische Vermessung und/oder Kalibrierung einer Kraftfahrzeugkomponente, insbesondere eines Fahrwerks, anzugeben, der es ermöglicht, von dem Messkopf bestimmte Messwerte auch während eines Einstellvorgangs von Fahrzeugparametern, insbesondere von einer Position neben einem Rad oder unterhalb des zu vermessenden Kraftfahrzeugs, abzulesen.

Diese Aufgabe wird durch einen Messkopf gemäß dem unabhängigen Patentanspruchs 1 und ein Verfahren gemäß Patentanspruch 14 gelöst. Vorteilhafte Weiterbildungen ergeben sich aus den abhängigen Patentansprüchen.

Ein erfindungsgemäßer Messkopf für die Fahrzeugvermessung, insbesondere für die Vermessung eines Fahrwerks eines Kraftfahrzeugs, ist zur Anordnung in einer in Bezug auf die Längsrichtung eines zu vermessenden Kraftfahrzeugs in etwa mittigen Position seitlich neben oder an einer Hebebühne oder seitlich neben dem Fahrzeug an einem Messplatz ausgebildet und umfasst wenigstens eine mach hinten gerichtete Bildaufnahmevorrichtung, die zur Aufnahme von Bildern wenigstens einer an einem Hinterrad des Kraftfahrzeugs angebrachten Messtafel ausgebildet ist und wenigstens eine vordere Bildaufnahmevorrichtung, die zur Aufnahme von Bildern wenigstens einer an einem Vorderrad des zu vermessenden Kraftfahrzeugs angebrachten Messtafel ausgebildet ist. Wenn der Messkopf in einer zur Fahrzeugvermessung geeigneten Position und Orientierung neben dem zu vermessenden Kraftfahrzeug angeordnet ist, ist eine Blickrichtung der wenigstens einen nach hinten gerichteten Bildaufnahmevorrichtung auf eine an einem Hinterrad des zu vermessenden Kraftfahrzeugs angebrachten Messtafel gerichtet und eine Blickrichtung der wenigstens einen vorderen Bildaufnahmevorrichtung ist auf eine an einem Vorderrad des zu vermessenden Kraftfahrzeugs angebrachten Messtafel gerichtet. Der Messkopf umfasst auch wenigstens eine in den Messkopf integrierte Anzeigevorrichtung, die dazu ausgebildet ist, aktuelle Messdaten des Messkopfes und/oder Anweisungen an einen Benutzer des Messkopfes als Grafiken und/oder alphanumerischen Zeichen anzuzeigen . Die wenigstens eine Anzeigevorrichtung ist an oder in einer Seitenfläche des Messkopfes ausgebildet, wobei die Flächennormale der Seitenfläche im Wesentlichen parallel zu der Blickrichtung einer der Bildaufnahmevorrichtungen ausgerichtet ist.

Die Erfindung umfasst auch einen Messplatz und eine Hebebühne zur Fahrzeugvermessung mit wenigstens einer Fahrschiene zur Aufnahme eines zu vermessenden Kraftfahrzeugs, mit wenigstens einem erfindungsgemäß ausgebildeten Messkopf und mit einer an der wenigstens einen Fahrschiene ausgebildeten Haltevorrichtung zum Abstützen des wenigstens einen erfindungsgemäß ausgebildeten Messkopfes. Dabei sind der wenigstens eine Messkopf und die Haltevorrichtung so ausgebildet, dass die wenigstens eine Anzeigevorrichtung des wenigstens einen Messkopfes von einer Position an einem Rad oder unterhalb des zu vermessenden Kraftfahrzeugs ablesbar ist, wenn der Messkopf in der Haltevorrichtung angeordnet ist und das zu vermessende Kraftfahrzeug in einer zur Fahrzeugvermessung geeigneten Position auf der wenigstens einen Fahrschiene positioniert ist.

Die Erfindung umfasst darüber hinaus ein Verfahren zum Vermessen eines Kraftfahrzeugs mit einem erfindungsgemäß ausgebildeten Messkopf. Dabei umfasst das Verfahren, den Messkopf in einer zum Vermessen des Kraftfahrzeugs geeigneten Position an dem zu vermessenden Kraftfahrzeug anzuordnen, den Messkopf zur Fahrzeugvermessung zu aktivieren und Messdaten des Messkopfes und/ oder Anweisungen an einen Benutzer von der wenigstens eine Anzeigevorrichtung des Messkopfes von einer Position an einem Rad oder unterhalb des Kraftfahrzeugs abzulesen.

Die Erfindung umfasst auch ein Verfahren zum Einstellen wenigstens eines Fahrwerksparameters eines Kraftfahrzeugs. Das Verfahren umfasst, das Kraftfahrzeug mit einem erfindungsgemäßen Verfahren zu vermessen und den Wert des wenigstens einen Fahrwerksparameters auf der wenigstens einen Anzeigevorrichtung abzulesen. Das Verfahren umfasst darüber hinaus, den wenigstens einen Fahrwerksparameter von einer Position an einem Rad oder unterhalb des Kraftfahrzeugs zu verändern und dabei den sich verändernden Wert des wenigstens einen Fahrwerksparameters auf der wenigstens einen Anzeigevorrichtung des Messkopfes abzulesen, bis der abgelesene Wert des wenigstens einen Fahrwerksparameters mit einem vorgegebenen Sollwert übereinstimmt.

Eine schräg zur Blickrichtung der wenigstens einen Bildaufnahmevorrichtung ausgerichtete Anzeigevorrichtung des Messkopfes kann sowohl von Positionen an einem Rad als auch von Positionen unterhalb des Kraftfahrzeugs gut abgelesen werden. Die Anzeigevorrichtung kann daher gut und bequemen abgelesen werden, während Einstellarbeiten an dem Kraftfahrzeug durchgeführt werden, ohne eine dafür notwendige Position an dem Rad oder unterhalb des Kraftfahrzeugs zu verlassen. Einstellarbeiten, die von einer Position an einem Rad oder unterhalb des Kraftfahrzeugs durchgeführt werden müssen, können dadurch besonders effizient durchgeführt werden, und das Risiko von Fehleinstellungen, die sich aus einem fehlerhaften oder unterlassenen Ablesen der Anzeigevorrichtung ergeben können, kann erheblich reduziert werden.

In einer Ausführungsform ist die Seitenfläche, auf der die wenigstens eine Anzeigevorrichtung ausgebildet ist, so ausgerichtet, dass die Flächennormale der Seitenfläche gegenüber der Blickrichtung der Bildaufnahmevorrichtung um einem Winkel zwischen 0° und 15° in Richtung auf das zu vermessende Kraftfahrzeug gedreht ist, wenn der Messkopf in einer zur Fahrzeugvermessung geeigneten Position und Orientierung neben dem zu vermessenden Kraftfahrzeug angeordnet ist.

In einer Ausführungsform umfasst die wenigstens eine Anzeigevorrichtung eine erste Anzeigevorrichtung und eine zweite Anzeigevorrichtung. Die ersten Anzeigevorrichtung ist an oder in einer Seitenfläche ausgebildet, deren Flächennormale auf ein Hinterrad des Kraftfahrzeug ausgerichtet ist, wenn der Messkopf zur Fahrzeugvermessung neben einem zu vermessenden Fahrzeug angeordnet ist. Die zweite Anzeigevorrichtung ist an oder in einer Seitenfläche ausgebildet, deren Flächennormale auf ein Vorderrad des Kraftfahrzeug ausgerichtet ist, wenn der Messkopf zur Fahrzeugvermessung neben einem zu vermessenden Fahrzeug angeordnet ist. Auf diese Weise können Informationen, die auf den Anzeigevorrichtungen angezeigt werden, sowohl aus einem vorderen Bereich als auch aus einem hinteren Bereich des Kraftfahrzeugs gut und bequem abgelesen werden.

In einer Ausführungsform ist die Seitenfläche, an oder in der die wenigstens eine Anzeigevorrichtung ausgebildet ist, um eine horizontale Achse nach oben geneigt. Dabei ist die Seitenfläche insbesondere in einem Winkel zwischen 0° und 15°, insbesondere in einem Winkel zwischen 5° und 10°, aus einer vertikalen Orientierung nach oben geneigt, d.h. die Normale der Seitenfläche ist um einen Winkel zwischen 0° und 15° aus der Horizontalen nach oben geneigt. Eine derart ausgerichtete Anzeigevorrichtung ist besonders gut ablesbar, während Einstellarbeiten an dem Kraftfahrzeug durchgeführt werden.

In einer Ausführungsform weist die wenigstens eine Anzeigevorrichtung eine Auflösung von wenigsten 50 mal 25 Pixeln, insbesondere eine Auflösung von wenigsten 100 mal 50 Pixeln, auf, so dass eine Vielzahl unterschiedlicher alphanumerischer und graphischer Informationen auf der Anzeigevorrichtung dargestellt werden können.

Die wenigstens eine Anzeigevorrichtung kann kostengünstig als einfarbige Anzeigevorrichtung ausgebildet sein. Alternativ kann die wenigstens eine Anzeigevorrichtung als mehrfarbige Anzeigevorrichtung ausgebildet sein. Durch eine farbige Darstellung der Informationen kann die Erkennbarkeit der dargestellten Informationen noch weiter zu verbessert werden.

In einer Ausführungsform umfasst die wenigstens eine Anzeigevorrichtung wenigstens ein OLED-Anzeigeelement. OLED-Anzeigeelemente ermöglichen eine kontrastreiche Darstellung von Informationen und sind über einen großen Winkelbereich gut ablesbar, so dass die wenigstens eine Anzeigevorrichtung aus einem gro-βen Bereich unterhalb des Kraftfahrzeugs gut ablesbar sind.

In einer Ausführungsform umfasst die wenigstens eine Anzeigevorrichtung wenigstens ein kostengünstiges LED- und/oder LCD-Anzeigeelement.

In einer Ausführungsform ist die wenigstens eine Anzeigevorrichtung derart in die Seitenfläche des Messkopfes integriert, dass die wenigstens eine Anzeigevorrichtung nicht von Seitenfläche des Messkopfes hervorsteht und nicht über die Seitenfläche des Messkopfes hinausragt. Die Anzeigevorrichtung kann insbesondere planar oder zurückgesetzt in der Seitenfläche des Messkopfes ausgebildet sein. Auf diese Weise kann zuverlässig verhindert werden, dass die Anzeigevorrichtung ein vom jeweiligen Messkopf hervorstehendes Hindernis bildet und so leicht beschädigt werden oder Verletzungen verursachen kann.

In einer Ausführungsform weist der Messkopf eine mechanische Schutzvorrichtung auf, die dazu ausgebildet ist, die wenigstens eine Anzeigevorrichtung vor äußeren mechanischen Einflüssen, insbesondere Stößen, zu schützen, um Beschädigungen der wenigstens einen Anzeigevorrichtung zu vermeiden.

In einer Ausführungsform ist die Schutzvorrichtung als sich wenigstens teilweise um die wenigstens eine Anzeigevorrichtung erstreckender Rahmen und/oder als den Messkopf wenigstens teilweise umschließendes Schutzgehäuse ausgebildet, um die wenigstens eine Anzeigevorrichtung zuverlässig vor Beschädigungen zu schützen.

Ein einer Ausführungsform eines erfindungsgemäßen Messplatzes bzw. einer erfindungsgemäßen Hebebühne ist, wenn das zu vermessende Kraftfahrzeug in einer zur Fahrzeugvermessung geeigneten Position auf der wenigstens einen Fahrschiene positioniert ist, die Seitenfläche des wenigstens einen Messkopfes, an der die wenigstens eine Anzeigevorrichtung ausgebildet ist, auf einem dem zu vermessenden Kraftfahrzeug zugewandten inneren Messkopfbereich ausgebildet, und die Seitenfläche ist schräg zu einer Längsmittelebene des zu vermessenden Kraftfahrzeugs ausgerichtet.

Im Folgenden wird ein Ausführungsbeispiel der Erfindung unter Bezugnahme auf die beiliegenden Figuren näher erläutert.
Figur 1 zeigt eine perspektivische Ansicht eines auf einer Hebebühne stehenden Kraftfahrzeugs mit an den Rädern des Kraftfahrzeugs angebrachten Messtafeln und einem seitlich neben den Fahrschienen angebrachten Messkopf.
Figur 2 zeigt eine schematische Draufsicht auf den in der Figur 1 gezeigten Messplatz.
Figur 3(a) zeigt eine perspektivische Ansicht auf ein Ausführungsbeispiel eines erfindungsgemäß ausgebildeten Messkopfes mit Blickrichtung aus einer Position von außen und von oberhalb des Messkopfes
Figur 3(b) zeigt eine perspektivische Ansicht des Messkopfes mit Blickrichtung aus einer Position schräg von innen und oberhalb des Messkopfes.
Figur 3(c) zeigt eine perspektivische Ansicht des Messkopfes mit Blickrichtung aus einer Position schräg von außen und oberhalb des Messkopfes.

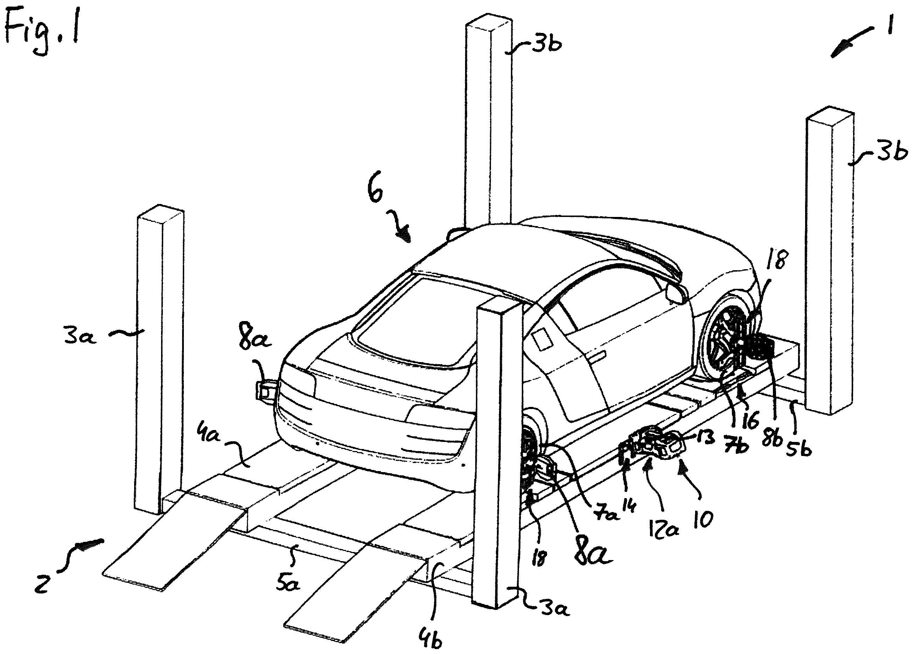

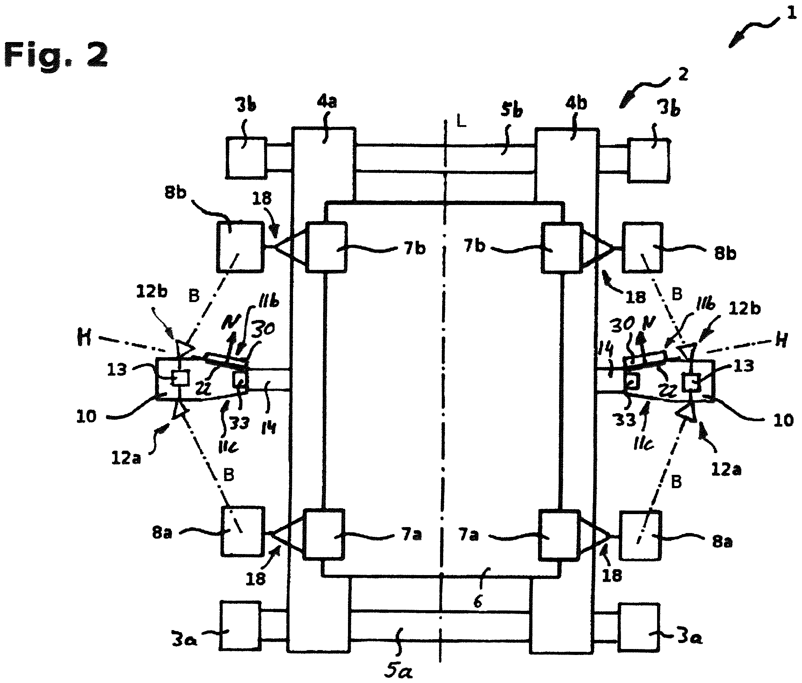

Figur 1 zeigt eine perspektivische Ansicht eines mit einer Hebebühne 2 ausgestatteten Messplatzes 1 mit einem auf der Hebebühne 2 positionierten Kraftfahrzeug 6. Figur 2 zeigt eine schematische Draufsicht auf den in der Figur 1 gezeigten Messplatz 1.

Die Hebebühne 2 verfügt über vier Säulen 3a, 3b, nämlich zwei hintere Säulen 3a und zwei vordere Säulen 3b, einen hinteren Querträger 5a, der sich zwischen den beiden hinteren Säulen 3a erstreckt, und einen vorderen Querträger 5b, der sich zwischen den beiden vorderen Säulen 3b erstreckt. Eine linke und rechte Fahrschiene 4a, 4b liegen auf den Querträgern 5a, 5b auf. Durch Anheben der Querträger 5a, 5b können die Fahrschienen 4a, 4b und das darauf stehende Kraftfahrzeug 6 angehoben werden, so das Reparaturen und Einstellarbeiten einer Position unterhalb des Kraftfahrzeugs 6 vorgenommen werden können.

An jedem der vier Räder 7a, 7b des Kraftfahrzeugs 6 ist mit Hilfe eines Radadapters 18 jeweils eine erfindungsgemäß ausgebildete Messtafel 8a, 8b angebracht. In der perspektivischen Darstellung der Figur 1 sind nur zwei der vier Räder 7a, 7b des Kraftfahrzeugs 6, nämlich die beiden Räder 7a, 7b auf der rechten Seite des Kraftfahrzeugs 6, und drei der vier Messtafeln 8a, 8b sichtbar. Die beiden Räder 7a, 7b auf der linken Seite des Kraftfahrzeugs 6 werden von der Karosserie des Kraftfahrzeugs 6 verdeckt.

Um Lenkeinschläge zu ermöglichen, sind die Vorderräder 7b des Kraftfahrzeugs 6 auf Drehplatten 15 positioniert, die auf bzw. in den Fahrschienen 4a, 4b angeordnet sind.

Auf der äußeren (rechten) Seite der rechten Fahrschiene 4b und ebenso auf der äußeren (linken) Seite der linken Fahrschiene 4a befindet sich jeweils ein Messkopf 10. In der Figur 1 ist der an der linken Fahrschiene 4a positionierte Messkopf 10 nicht sichtbar, da er von dem Kraftfahrzeug 6 verdeckt wird.

Die Messköpfe 10 sind mit geeigneten Anbringmitteln 14 an den Fahrschienen 4a, 4b der Hebebühne 2 angebracht. Die Messköpfe 10 können beispielsweise durch Aufschieben auf eine jeweils nach außen gerichtete Haltevorrichtung 14, die an der jeweiligen Fahrschiene 4a, 4b angebracht ist, an den Fahrschienen 4a, 4b befestigt sein.

Die Messköpfe 10 sind in Bezug auf die Längsrichtung der Fahrschiene 4a, 4b und des Kraftfahrzeugs 6 in einer in etwa mittigen Position angebracht. Dadurch kann eine vordere, in der Figur 1 nicht sichtbare, Bildaufnahmevorrichtung 12b jedes Messkopfes 10 Bilder der an dem jeweiligen Vorderrad 7b angebrachten Messtafel 8b und eine nach hinten gerichtete Bildaufnahmevorrichtung 12a des Messkopfes 10 Bilder der an dem jeweiligen Hinterrad 7a angebrachten Messtafel 8a aufnehmen. Die Bildaufnahmevorrichtungen 12a, 12b der Messköpfe 10 können insbesondere als kostengünstige 2D-Kameras ausgebildet sein.

Die Bildaufnahmevorrichtungen 12a, 12b sind so ausgerichtet, dass die Blickrichtungen B der Bildaufnahmevorrichtungen 12a, 12b auf die an den Rädern 7a, 7b des Kraftfahrzeugs 6 angebrachten Messtafeln 8a, 8b gerichtet sind.

Jeder Messkopf 10 umfasst eine Bildverarbeitungseinheit 13, die zur Verarbeitung und Auswertung der von den Bildaufnahmevorrichtungen 12a, 12b aufgenommenen Bilder ausgebildet ist. Alternativ können die von den Bildaufnahmevorrichtungen 12a, 12b aufgenommenen Bilder auch an eine einzige, innerhalb oder außerhalb eines Messkopfes 10 angeordnete Bildverarbeitungseinheit 13 übertragen und dort verarbeitet werden.

Auf den dem Kraftfahrzeug 6 zugewandten Innenseiten 11a der beiden Messköpfe 10, also an der zu dem jeweils gegenüberliegenden Messkopf 10 hin ausgerichteten Seite jedes Messkopfes 10, ist jeweils ein Referenzsystem 33 vorgesehen. Jedes Referenzsystem 33 umfasst eine Querkamera und wenigstens ein optisch wahrnehmbares Element. Durch die Referenzsysteme 33 der beiden in Querrichtung einander gegenüberliegenden Messköpfe 10 können sich die beiden Messköpfe 10 in Querrichtung unterhalb des Kraftfahrzeugs 6 zueinander referenzieren. Dabei werden die Positionen und Ausrichtungen der beiden Messköpfe 10 in Bezug zueinander bestimmt, so dass die Bildaufnahmen der Messtafeln 8a, 8b von beiden Messköpfen 10 in ein gemeinsames Koordinatensystem gebracht werden können.

Obwohl der in den Figuren 1 und 2 gezeigte Messplatz 1 mit einer Hebebühne 2 ausgestattet ist, können erfindungsgemäß ausgebildete Messköpfe 10 auch an Messplätzen 1 eingesetzt werden, die nicht mit einer Hebebühne 2 ausgestattet sind. Die Messköpfe 10 können insbesondere auch an Fahrschienen 4a, 4b, die auf dem Boden eines Messplatzes 1 installiert sind, angebracht werden oder neben dem Kraftfahrzeug 6 auf den Boden des Messplatzes 1 gestellt werden.

Jeder Messkopf 10 weist wenigstens eine Anzeigevorrichtung 22 auf, die dazu ausgebildet ist, Messdaten (Messergebnisse) der Fahrzeugvermessung und/oder Bedienungsanweisungen an einen Benutzer auszugeben.

Die wenigstens eine Anzeigevorrichtung 22 ist an oder in einer dem Kraftfahrzeug 6 zugewandten Seitenwand 11b des Messkopfes 10 ausgebildet. Die Seitenwand 11b, in/and der die Anzeigevorrichtung 22 ausgebildet ist, ist so ausgerichtet, dass eine Flächennormale N der Seitenwand 11b, die sich orthogonal von der Seitenwand 11b erstreckt, im Wesentlichen parallel zur Blickrichtung B einer Bildaufnahmevorrichtung 12a, 12b des Messkopfes 10 ausgerichtet ist. Die Flächennormale N der Seitenwand 11b ist insbesondere gegenüber der Blickrichtung B der Bildaufnahmevorrichtung 12a, 12b des Messkopfes 10 um eine vertikale Achse nach innen, d.h. in Richtung auf das Kraftfahrzeug 6, gedreht. Die Seitenwand 11b ist z.B. so ausgerichtet, dass Flächennormale N der Seitenwand 11b um einen Winkel zwischen 0° und 15° gegenüber der Blickrichtung B der Bildaufnahmevorrichtung 12a, 12b nach innen gedreht ist.

Eine so ausgerichtete Anzeigevorrichtung 22 kann bequem von einem Benutzer, der sich in einer Position unterhalb des Kraftfahrzeugs 6 oder an einem Rad 7b des Kraftfahrzeugs 6 befindet, abgelesen werden. Insbesondere kann die Anzeigevorrichtung 22 einfach und bequem von einem Benutzer/Mechaniker abgelesen werden, der sich unter dem Kraftfahrzeug 6 oder an einem Rad 7b des Kraftfahrzeugs 6 befindet, um Einstellarbeiten am Kraftfahrzeug 6, insbesondere am Fahrwerk des Kraftfahrzeugs 6, vorzunehmen. Die Einstellarbeiten können auf diese Weise besonders effizient und exakt vorgenommen werden, da die Ergebnisse jeder Veränderung von Parametern des Kraftfahrzeugs 6, insbesondere von Parametern des Fahrwerks des Kraftfahrzeugs 6, unmittelbar auf wenigstens einer der Anzeigevorrichtungen 22 abgelesen werden können, ohne die für die Einstellarbeiten notwendige Position zu verlassen.

Um die Ablesbarkeit der Anzeigevorrichtungen 22 noch weiter zu verbessern, können die Seitenwände 11b, in bzw. an denen die Anzeigevorrichtungen 22 ausgebildet sind, zusätzlich um einer horizontale Achse H, die sich parallel zum Boden des Messplatzes 1 und zur Zeichenebene der Figur 2 erstreckt, aus einer vertikalen Ausrichtung nach oben geneigt sein. Die Seitenwände 11b können beispielsweise in einem Winkel zwischen 0° und 15°, insbesondere in einem Winkel zwischen 5° und 10° aus der Vertikalen nach oben geneigt sein.

In dem in der Figur 2 gezeigten Ausführungsbeispiel sind die Anzeigevorrichtungen 22 an schräg ausgerichteten Seitenwänden 11b der Messköpfe 10 ausgebildet, die den Vorderrädern 7b des Kraftfahrzeugs 6 zugewandt sind. Alternativ oder zusätzlich können Anzeigevorrichtungen 22 auch an oder in zu den Hinterrädern 7a ausgerichteten (hinteren) Seitenwänden 11c der Messköpfe 10 ausgebildet sein. Dadurch kann die Erkennbarkeit und Ablesbarkeit der Anzeigevorrichtungen 22, insbesondere aus Positionen unterhalb des hinteren Bereichs des Kraftfahrzeugs 6, noch weiter verbessert werden.

Die Anzeigevorrichtungen 22 haben eine Auflösung von wenigsten 50 mal 25 Pixeln, insbesondere eine Auflösung von 128 mal 64 Pixeln, so dass eine Vielzahl unterschiedlicher alphanumerischer und/oder graphische Informationen und Anweisungen auf den Anzeigevorrichtungen 22 angezeigt werden können.

Die Anzeigevorrichtungen 22 können als kostengünstige einfarbige Anzeigevorrichtungen 22 ausgebildet sein. Alternativ können die Anzeigevorrichtungen 22 auch als mehrfarbige Anzeigevorrichtungen 22 ausgebildet sein, so dass die auf den Anzeigevorrichtungen 22 dargestellten Informationen auch farblich codiert sein können. Durch eine farbliche Codierung kann die Ablesbarkeit der auf den Anzeigevorrichtungen 22 dargestellten Informationen noch weiter verbessert werden.

Die Anzeigevorrichtungen 22 können wenigstens ein OLED-Anzeigeelement umfassen. OLED-Anzeigeelemente ermöglichen eine kontrastreiche Darstellung von Informationen und sind aus einen großen Winkelbereich gut ablesbar, so dass mit OLED-Anzeigeelementen ausgestattete Anzeigevorrichtungen 22 aus einem gro-βen Bereich unterhalb des Kraftfahrzeugs 6 gut ablesbar sind.

Die Anzeigevorrichtungen 22 können auch kostengünstige LED- und/oder LCD-Anzeigeelemente umfassen.

Die Anzeigevorrichtungen 22 sind insbesondere derart in die jeweilige Seitenwand 11b des Messkopfes 10 integriert, dass sie nicht nach außen von der Seitenwand 11b des Messkopfes 10 hervorstehen und nicht über die Seitenwand 11b des Messkopfes 10 hinausragen. Mit anderen Worten, die Anzeigevorrichtungen 22 sind planar oder zurückgesetzt in der jeweiligen Seitenwand 11b des Messkopfes 10 ausgebildet. Auf diese Weise wird zuverlässig vermieden, dass die Anzeigevorrichtungen 22 vom jeweiligen Messkopf 10 hervorstehende Hindernisse bilden, die leicht beschädigt werden oder Verletzungen verursachen können.

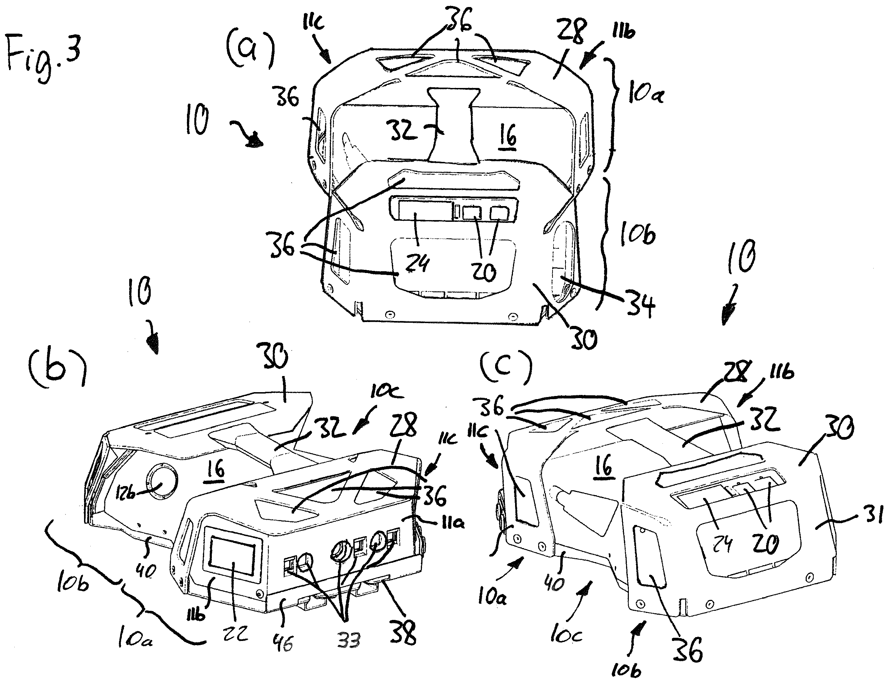

Die Messköpfe 10 weisen auch wenigstens eine mechanische Schutzvorrichtung 30 auf, die dazu ausgebildet ist, die Anzeigevorrichtungen 22 vor mechanischen Einflüssen, beispielsweise vor Stößen, zu schützen. Die Schutzvorrichtungen 30 können als sich wenigstens teilweise um die Anzeigevorrichtung 22 erstreckender Rahmen und/oder als den Messkopf 10 wenigstens teilweise umschließendes Schutzgehäuse 28, 30, 40 ausgebildet ist. Ein Beispiel für ein solches Schutzgehäuse 28, 30, 40 wird im Folgenden unter Bezugnahme auf die Figuren 3(a) bis 3(c) beschrieben.

Um den Grundgedanken der Erfindung, die Anzeigevorrichtungen 22 so in einem Winkel zur Bildaufnahmerichtung B der Bildaufnahmevorrichtungen 12a, 12b auszurichten, dass sie von Positionen unterhalb des Kraftfahrzeugs 6 gut ablesbar sind, besonders deutlich zu veranschaulichen, sind die Geometrie und der Aufbau der Messköpfe 10 in der Figur 2 nur schematisch gezeigt.

Ein konkretes Beispiel für die geometrische Ausgestaltung eines erfindungsgemäß mit wenigstens einer Anzeigevorrichtung 22 ausgestatteten Messkopfes 10 wird im Folgenden unter Bezugnahme auf die Figuren 3(a) bis 3(c) beschrieben.

Figur 3(a) zeigt eine perspektivische Ansicht auf ein Ausführungsbeispiel eines erfindungsgemäß ausgebildeten Messkopfes 10 mit Blickrichtung aus einer Position von außen und von oberhalb des Messkopfes 10. Figur 3(b) zeigt eine perspektivische Ansicht des Messkopfes 10 mit Blickrichtung aus einer Position schräg von innen und oberhalb des Messkopfes 10; und Figur 3(c) zeigt eine perspektivische Ansicht des Messkopfes 10 mit Blickrichtung aus einer Position schräg von außen und oberhalb des Messkopfes 10.

Der Messkopf 10 hat einen inneren Messkopfbereich 10a und einen äußeren Messkopfbereich 10b. Die Begriffe "innen" und "außen" beziehen sich dabei auf die in den Figuren 1 und 2 gezeigte Anordnung des Messkopfes 10 auf einem Messplatz 1, insbesondere in Bezug auf die Längsmittelebene L der Hebebühne 2 bzw. die Längsmittelebene L des auf den Fahrschienen 4a, 4b der Hebebühne 2 stehenden Kraftfahrzeugs 6.

Der Messkopf 10 verfügt über eine Abdeckung 16 und eine in den Figuren 3(a) bis 3(c) nicht sichtbare untere Schutzplatte aus Kunststoff. Die Abdeckung 16 und die Schutzplatte bilden zusammen ein Gehäuse, welches das Messsystem und seine Bestandteile umschließt und die optischen Elemente, insbesondere die Bildaufnahmevorrichtungen 12a, 12b, die optischen Elemente des Referenzsystems 33, die Anzeigevorrichtungen 24 und 22 und Bedienelemente 20 des Messkopfes 10 so einfasst, dass die Bestandteile des Messsystems so staub-, berührungs- und spritzwasserdicht umschlossen sind, dass sie gegen Staub und Berührung und gegen Spritzwasser geschützt sind und insbesondere wenigstens den Schutzgrad IP54 der Norm EN60529: "Schutz durch Gehäuse vor Fremdkörpern und Wasser" erfüllen.

In der Darstellung der Figur 3(b) ist an einem linken äußeren Bereich in der Abdeckung 16 eine Bildaufnahmevorrichtung 12b zu erkennen. Entsprechend ist eine in der Figur 3(b) nicht zu erkennende weitere Bildaufnahmevorrichtung 12a auf der rechten äußeren Seite der Abdeckung 16 angeordnet. Die Bildaufnahmevorrichtungen 12a, 12b sind so angeordnet und ausgebildet, dass sie Bilder von den Messtafeln 8a, 8b, die an den Rädern 7a, 7b des Kraftfahrzeugs 6 angebracht sind, aufnehmen können, wie es in den Figuren 1 und 2 gezeigt und zuvor beschrieben worden ist.

Die optischen Elemente des Referenzsystems 33 sind in einer im Wesentlichen senkrecht ausgerichteten innere Seitenwand 11a der Abdeckung 16 angeordnet, welche, wiederum bezogen auf die Längsmittelebene L, die Innenseite des Messkopfes 10 bildet und im Betrieb des Messkopfes 10 dem zu vermessenden Kraftfahrzeug 6 zugewandt ist. Die optischen Elemente des Referenzsystems 33 umfassen insbesondere eine in der Mitte der inneren Seitenwand 11a angeordnete Kamera, eckig dargestellte Beamer, die als Dioden ausgebildet sind, und rund dargestellte Synchron-LEDs.

Die optischen Elemente des Referenzsystems 33 wirken mit den in Querrichtung des Kraftfahrzeugs 6 gegenüberliegenden optischen Elementen des Referenzsystems 33 eines gegenüberliegenden, auf der anderen Seite des Kraftfahrzeugs 6 angeordneten, Messkopfes 10 zusammen und sorgen dafür, dass die Positionen und Ausrichtungen der beiden Messköpfe 10 in Bezug zueinander ermittelt werden können. So können die Bildaufnahmen der Messtafeln 8a, 8b, die durch die Bildaufnahmevorrichtungen 12a, 12b der beiden Messköpfe 10 getätigt worden sind, in ein gemeinsames Koordinatensystem gebracht werden.

Links und rechts an diese innere Seitenwand 11a angrenzend sind schräge Seitenwände 11b, 11c ausgebildet. In der in der Figur 3(b) auf der linken Seite dargestellten schrägen Seitenwand 11b ist eine Anzeigevorrichtung 22 vorgesehen. Wie zuvor beschrieben, ist die schräge Seitenwand 11b, in der die Anzeigevorrichtung 22 ausgebildet ist, gegenüber der Bildaufnahmerichtung B der Bildaufnahmevorrichtung 12b derart um eine vertikale Achse gedreht, dass die Flächennormale N der Seitenwand 11b bzw. der Anzeigevorrichtung 22 dem Kraftfahrzeug 6 zugewandt ist, wenn der Messkopf 10 in einer Messposition neben dem Kraftfahrzeug 6 positioniert ist, wie es in den Figuren 1 und 2 gezeigt ist.

Auch in der Seitenwand 11c ist eine in den Figuren 3(a) bis 3(c) nicht sichtbare Anzeigevorrichtung 22 vorgesehen, die entsprechend der in der Seitenwand 11b vorgesehenen Anzeigevorrichtung 22 ausgebildet ist.

In einem mittleren Messkopfbereich 10c, der sich zwischen dem inneren Messkopfbereich 10a und dem äußeren Messkopfbereich 10b befindet, sind die Breite und die Höhe der Abdeckung 16 etwas verjüngt. Ausgehend von diesem in der Höhe und der Breite verjüngten mittleren Messkopfbereich 10c nimmt die Höhe und Breite der Abdeckung 16 wieder zu, wobei, wie insbesondere in der Figur 3(a) gut zu erkennen ist, die Breite der Abdeckung 16 in dem äußeren Messkopfbereich 10b geringer als die Breite der Abdeckung 16 in dem inneren Messkopfbereich 10a ist.

Der Übergang der schrägen Seitenwände 11b zur Oberseite der Abdeckung 16 ist im mittleren und äußeren Messkopfbereich 10b, 10c gebogen ausgeführt. Die äu-βere Wand der Abdeckung 16 ist nicht senkrecht, sondern mit einem Winkel zur Horizontalen ausgeführt. Auf der Oberseite der Abdeckung 16 im äußeren Messkopfbereich 10b sind, wie in den Figuren 3(a) und 3(c) gut zu erkennen ist, eine weitere Anzeigevorrichtung 24 und zwei neben der weiteren Anzeigevorrichtung 24 angeordnete Bedienelemente 20, zum Beispiel Bedienknöpfe, vorgesehen. Die Anzahl der Bedienelemente 20 ist selbstverständlich nur beispielhaft und es können auch mehr oder weniger als zwei Bedienelemente 20 vorgesehen sein.

Die Bedienelemente 20 können beispielsweise dazu vorgesehen und ausgebildet sein, den Messkopf 10 ein- und auszuschalten, verschiedene Funktionen des Messkopfes 10 aufzurufen, Einstellungen des Messkopfes 10 zu verändern, einen Messvorgang zu starten und/oder zu beenden.

Die weitere Anzeigevorrichtung 24 kann insbesondere dazu ausgebildet sein, einen Betriebszustand des Messkopfes 10 anzuzeigen. Die weitere Anzeigevorrichtung 24 kann insbesondere als "E-Paper" ausgebildet sein, so dass sie auch im ausgeschalteten Zustand des Messkopfes 10, wenn die weitere Anzeigevorrichtung 24 nicht mit elektrischen Strom versorgt wird, ablesbar ist. So kann die Handhabung des Messkopfes 10 weiter vereinfacht werden, da der letzte Betriebszustand des Messkopfes 10 und/oder Einstellungen des Messkopfes 10, beispielsweise der Ladezustand einer Batterie des Messkopfes 10 und/oder die Zuordnung des Messkopfes 10 zur linken oder zur rechten Seite des Kraftfahrzeugs 6, auch im ausgeschalteten Zustand und/oder bei einer leeren Batterie abgelesen werden können.

Der Messkopf 10 verfügt des Weiteren über ein Schutzgehäuse 28, 30, 40 aus Metall, das die Abdeckung 16, die Schutzplatte und das von der Abdeckung 16 und der Schutzplatte umschlossene Messsystem mit seinen Bestandteilen wenigstens teilweise umgibt. Das Schutzgehäuse 28, 30, 40 umfasst eine metallene Basisplatte 40, den den Boden des Messkopfes 10 bildet, einen inneren Schutzgehäusebereich 28 und einen äußeren Schutzgehäusebereich 30.

Der innere Schutzgehäusebereich 28 und der äußere Schutzgehäusebereich 30 können insbesondere fest an die metallene Basisplatte 40 angeschraubt sein.

Die aus Metall ausgebildete Basisplatte 40 weist auf der im Betrieb dem Kraftfahrzeug 6 zugewandten Innenseite des Messkopfes 10 einen nach oben kragenden Endabschnitt 42 auf, der insbesondere in der Figur 3(b) gut zu erkennen ist.

In einem mittleren Bereich dieses nach oben kragenden Endabschnitts 42 ist eine Aussparung ausgebildet, wie in der Figur 3(b) gut zu erkennen ist. Auf diese Weise kann auf der Innenseite des Messkopfes 10 ein Einschubschacht 38 für eine bühnen- oder messplatzseitige Haltevorrichtung 14, insbesondere eine Halteplatte 14, ausgebildet sein, der es ermöglicht, den Messkopf 10 mit Hilfe der Haltevorrichtung 14 in einer vorgegebenen Position und Ausrichtung an einer der Fahrschienen 4a, 4b des Messplatzes 1 anzubringen und zu fixieren.

Der innere Schutzgehäusebereich 28 umschließt bereichsweise den inneren Messkopfbereich 10a, insbesondere nach oben hin und seitlich von der Anzeigevorrichtung 22. Der innere Schutzgehäusebereich 28 schützt so den inneren Messkopfbereich 10a, in dem das Referenzsystem 33 angeordnet ist, und die Anzeigevorrichtung 22 vor mechanischen Belastungen, die sonst zu Beschädigungen der Anzeigevorrichtung 22 und/oder des Referenzsystems 33 führen könnten.

Solche mechanische Belastungen umfassen beispielsweise Belastungen durch An- oder Überfahren des Messkopfes 10 mit dem Kraftfahrzeug 6, durch ein versehentliches Anstoßen oder Darauf-Steigen durch eine Person und/oder durch ein versehentliches Fallenlassen des Messkopfes 10.

Um das Gewicht des Messkopfes 10 möglichst gering zu halten, können an der Oberseite des inneren Schutzgehäusebereichs 28 Aussparungen 36 vorgesehen sein.

Der äußere Schutzgehäusebereich 30 umschließt bereichsweise den äußeren Messkopfbereich 10b, insbesondere an der Oberseite, an den vorderen Seitenbereichen und an der äußeren Stirnseite der Abdeckung 16. Auch im äußeren Schutzgehäusebereich 30 sind mehrere gewichtsreduzierende Aussparungen 36 vorgesehen.

Eine dieser Aussparungen 36 ist so ausgebildet, dass die weitere Anzeigevorrichtung 24 und die Bedienelemente 20, die auf der Oberseite der Abdeckung 16 ausgebildet sind, von außen gut sichtbar und bedienbar sind.

Der innere und der äußere Schutzgehäusebereich 28 und 30 sind so geformt, dass die Blickfelder der optischen Elemente, insbesondere der Bildaufnahmevorrichtungen 12a, 12b und der optischen Elemente des Referenzsystems 33, nicht beeinträchtigt werden.

Der innere Schutzgehäusebereich 28 und der äußere Schutzgehäusebereich 30 sind über einen oberen quer zu der Längsmittelebene L der Hebebühne 2 bzw. des Kraftfahrzeugs 6 gerichteten Griff 32 miteinander verbunden. Dieser Griff 32 kann aus Metall und/oder Kunststoff, insbesondere aus mit Kunststoff ummanteltem Metall, gefertigt sein.

Zwischen dem Griff 32 und der Oberseite des mittleren Messkopfbereichs 10c der Abdeckung 16 ist ein Zwischenraum ausgebildet, so dass der Griff 32 von oben gut gegriffen werden kann.

Auf der im Betrieb abgewandten Außenseite des Messkopfes 10 ist zwischen einer äußeren Seitenwand der Abdeckung 16 und einer äußeren Seitenwand 31 des äu-βeren Schutzgehäusebereichs 30 ein weiterer Zwischenraum ausgebildet. In diesen weiteren Zwischenraum kann beispielsweise eine zur Stromversorgung des Messkopfes 10 vorgesehene elektrische Batterie, insbesondere ein Akkumulator, eingebracht werden. Die elektrische Batterie kann insbesondere durch eine seitliche Batterie-Einschubaussparung 34, die in Figur 3(a) auf der rechten Seite des Messkopfes 10 zu erkennen ist, in den weiteren Zwischenraum eingebracht werden.

Um Wiederholungen zu vermeiden, wird für weitere Vorteile und Ausführungsformen an dieser Stelle auf den allgemeinen Beschreibungsteil verwiesen.

### Bezugszeichenliste

1 Messplatz
2 Hebebühne
3a hintere Säule
3b vordere Säule
4a linke Fahrschiene
4b rechte Fahrschiene
5a hinteren Querträger
5b vorderen Querträger
6 Kraftfahrzeug
7a Hinterrad
7b Vorderrad
8a hintere Messtafel
8b vordere Messtafel
10 Messkopf
10a innerer Messkopfbereich
10b äußerer Messkopfbereich
10c mittlerer Messkopfbereich
11a innere Seitenwand
11b vordere schräg ausgerichtete Seitenwand
11c hintere schräg ausgerichtete Seitenwand
12a hintere Bildaufnahmevorrichtung
12b vordere Bildaufnahmevorrichtung
13 Bildverarbeitungseinheit
14 Anbringmittel / Haltevorrichtung
15 Drehplatte
16 Abdeckung
18 Radadapter
20 Bedienelemente
22 Anzeigevorrichtung
24 weitere Anzeigevorrichtung
28 innerer Schutzgehäusebereich
30 äußere Schutzgehäusebereich
31 äußere Seitenwand
32 Griff
33 Referenzsystem
34 seitliche Batterie-Einschubaussparung
36 Aussparung
38 Batterie-Einschubschacht
40 Basisplatte
42 Endabschnitt

## Patentansprüche

1. Messkopf (10) für die Fahrzeugvermessung, insbesondere für die Vermessung eines Fahrwerks eines Kraftfahrzeugs (6),
wobei der Messkopf (10) zur Anordnung in einer in Bezug auf die Längsrichtung eines zu vermessenden Kraftfahrzeugs (6) in etwa mittigen Position seitlich neben dem zu vermessenden Kraftfahrzeug (6) ausgebildet ist und aufweist:
wenigstens eine nach hinten gerichtete Bildaufnahmevorrichtung (12a), die zur Aufnahme von Bildern wenigstens einer an einem Hinterrad (7a) des zu vermessenden Kraftfahrzeugs (6) angebrachten Messtafel (8a,) ausgebildet ist, wobei eine Blickrichtung (B) der wenigstens einen nach hinten gerichteten Bildaufnahmevorrichtung (12a) auf eine an einem Hinterrad (7a) des zu vermessenden Kraftfahrzeugs (6) angebrachten Messtafel (8a) gerichtet ist, wenn der Messkopf (10) in einer zur Fahrzeugvermessung geeigneten Position und Orientierung neben dem zu vermessenden Kraftfahrzeug (6) angeordnet ist;
wenigstens eine vordere Bildaufnahmevorrichtung (12b), die zur Aufnahme von Bildern wenigstens einer an einem Vorderrad (7b) des zu vermessenden Kraftfahrzeugs (6) angebrachten Messtafel (8b) ausgebildet ist, wobei eine Blickrichtung (B) der wenigstens einen vorderen Bildaufnahmevorrichtung (12b) auf eine an einem Vorderrad (7b) des zu vermessenden Kraftfahrzeugs (6) angebrachten Messtafel (8b) gerichtet ist, wenn der Messkopf (10) in der zur Fahrzeugvermessung geeigneten Position und Orientierung neben dem zu vermessenden Kraftfahrzeug (6) angeordnet ist; und
wenigstens eine in den Messkopf (10) integrierte Anzeigevorrichtung (22), die dazu ausgebildet ist, aktuelle Messdaten des Messkopfes (10) und/oder Anweisungen an einen Benutzer des Messkopfes (10) als Grafiken und/oder alphanumerische Zeichen anzuzeigen;
wobei die wenigstens eine Anzeigevorrichtung (22) an oder in einer Seitenfläche (11b, 11c) des Messkopfes (10) ausgebildet ist, deren Flächennormale (N) im Wesentlichen parallel zu der Blickrichtung (B) einer der Bildaufnahmevorrichtungen (12a, 12b) ausgerichtet ist.

2. Messkopf (10) nach Anspruch 1, wobei die Seitenfläche (11b, 11c) so ausgerichtet ist, dass dass die Flächennormale (N) der Seitenfläche (11b, 11c) um einem Winkel (α) zwischen 0° und 15° gegenüber der Blickrichtung (B) der Bildaufnahmevorrichtung (12a, 12b) in Richtung auf das zu vermessende Kraftfahrzeug (6) gedreht ist, wenn der Messkopf (10) in einer zur Fahrzeugvermessung geeigneten Position und Orientierung neben dem zu vermessenden Kraftfahrzeug (6) angeordnet ist.

3. Messkopf (10) nach Anspruch 1 oder 2, wobei die wenigstens eine Anzeigevorrichtung (22) eine erste Anzeigevorrichtung (22) und eine zweite Anzeigevorrichtung (22) umfasst, wobei die ersten Anzeigevorrichtung (22) an oder in einer Seitenfläche (11c) ausgebildet ist, deren Flächennormale (N) auf ein Hinterrad (7a) des Kraftfahrzeug (6) ausgerichtet ist, und wobei die zweite Anzeigevorrichtung (22) an oder in einer Seitenfläche (11b) ausgebildet ist, deren Flächennormale (N) auf ein Vorderrad (7b) des Kraftfahrzeug (6) ausgerichtet ist, wenn der Messkopf (10) in einer zur Fahrzeugvermessung geeigneten Position und Orientierung neben dem zu vermessenden Kraftfahrzeug (6) angeordnet ist.

4. Messkopf (10) nach einem der vorangehenden Ansprüche, wobei die Seitenfläche (11b, 11c), an oder in der die wenigstens eine Anzeigevorrichtung (22) ausgebildet ist, um eine horizontale Achse (H) nach oben geneigt ist.

5. Messkopf (10) nach Anspruch 4, wobei die Seitenfläche (11b, 11c) in einem Winkel zwischen 0° und 15° aus einer vertikalen Orientierung nach oben geneigt ist.

6. Messkopf (10) nach einem der vorangehenden Ansprüche, wobei die wenigstens eine Anzeigevorrichtung (22) eine Auflösung von wenigsten 50 mal 25 Pixeln, insbesondere eine Auflösung von wenigsten 100 mal 50 Pixeln aufweist und wobei die wenigstens eine Anzeigevorrichtung (22) als einfarbige oder als mehrfarbige Anzeigevorrichtung (22) ausgebildet ist.

7. Messkopf (10) nach einem der vorangehenden Ansprüche, wobei die wenigstens eine Anzeigevorrichtung (22) wenigstens ein OLED-Anzeigeelement umfasst.

8. Messkopf (10) nach einem der vorangehenden Ansprüche, wobei die wenigstens eine Anzeigevorrichtung (22) derart in die Seitenfläche (11b, 11c) des Messkopfes (10) integriert ist, dass die wenigstens eine Anzeigevorrichtung (22) nicht von der Seitenfläche (11b, 11c) des Messkopfes (10) hervorsteht und nicht über die Seitenfläche (11b, 11c) des Messkopfes (10) hinausragt.

9. Messkopf (10) nach Anspruch 8, wobei die wenigstens eine Anzeigevorrichtung (22) planar oder zurückgesetzt in der Seitenfläche (11b, 11c) des Messkopfes (10) ausgebildet ist.

10. Messkopf (10) nach einem der vorangehenden Ansprüche, wobei der Messkopf (10) eine mechanische Schutzvorrichtung (30) aufweist, die dazu ausgebildet ist, die wenigstens eine Anzeigevorrichtung (22) vor äußeren mechanischen Einflüssen, insbesondere vor Stößen, zu schützen.

11. Messkopf (10) nach Anspruch 10, wobei die Schutzvorrichtung (30) als sich wenigstens teilweise um die wenigstens eine Anzeigevorrichtung (22) erstreckender Rahmen und/oder als den Messkopf (10) wenigstens teilweise umschließendes Schutzgehäuse (28, 30, 40) ausgebildet ist.

12. Messplatz (1) oder Hebebühne (2) zur Fahrzeugvermessung mit wenigstens einer Fahrschiene (4a, 4b) zur Aufnahme eines zu vermessenden Kraftfahrzeugs (6), wenigstens einem Messkopf (10) nach einem der Ansprüche 1 bis 11 und einer an der wenigstens einen Fahrschiene (4a, 4b) ausgebildeten Haltevorrichtung (14), die zum Abstützen des wenigstens einen Messkopfes (10) ausgebildet ist,
wobei der wenigstens eine Messkopf (10) und die Haltevorrichtung (14) so ausgebildet sind, dass die wenigstens eine Anzeigevorrichtung (22) des wenigstens einen Messkopfes (10) von einer Position an einem Rad (7a, 7b) oder unterhalb des zu vermessenden Kraftfahrzeugs (6) ablesbar ist, wenn der wenigstens eine Messkopf (10) in der Haltevorrichtung (14) angeordnet ist und das zu vermessende Kraftfahrzeug (6) in einer zur Fahrzeugvermessung geeigneten Position auf der wenigstens einen Fahrschiene (4a, 4b) positioniert ist.

13. Messplatz (1) oder Hebebühne (2) nach Anspruch 12, wobei die Seitenfläche (11b, 11c) des wenigstens einen Messkopfes (10), an der die wenigstens eine Anzeigevorrichtung (22) ausgebildet ist, auf einem dem zu vermessenden Kraftfahrzeug (6) zugewandten inneren Messkopfbereich (10a) ausgebildet und wobei die Seitenfläche (11b, 11c) schräg zu einer Längsmittelebene (L) des zu vermessenden Kraftfahrzeugs (6) ausgerichtet ist, wenn das zu vermessende Kraftfahrzeug (6) in einer zur Fahrzeugvermessung geeigneten Position auf der wenigstens einen Fahrschiene (4a, 4b) positioniert ist.

14. Verfahren zum Vermessen eines Kraftfahrzeugs (6) mit wenigstens einem Messkopf (10) nach einem der Ansprüche 1 bis 11, wobei das Verfahren umfasst,
den wenigstens einen Messkopf (10) in einer zum Vermessen des Kraftfahrzeugs (6) geeigneten Position an dem zu vermessenden Kraftfahrzeug (6) anzuordnen;
den wenigstens einen Messkopf (10) zur Fahrzeugvermessung zu aktivieren; und
Messdaten des Messkopfes (10) und/oder Anweisungen an einen Benutzer von der wenigstens eine Anzeigevorrichtung (22) des wenigstens einen Messkopfes (10) von einer Position unterhalb des Kraftfahrzeugs (6) abzulesen.

15. Verfahren zum Einstellen wenigstens eines Fahrwerksparameters eines Kraftfahrzeugs (6), wobei das Verfahren umfasst,
das Kraftfahrzeug (6) mit einem Verfahren gemäß Patentanspruch 14 zu vermessen und den Wert des wenigstens einen Fahrwerksparameters auf der wenigstens einen Anzeigevorrichtung (22) abzulesen; sowie
von einer Position an einem Rad (7a, 7b) oder unterhalb des Kraftfahrzeugs (6) den wenigstens einen Fahrwerksparameter zu verändern und den sich verändernden Wert des wenigstens einen Fahrwerksparameters auf der wenigstens einen Anzeigevorrichtung (22) des wenigstens einen Messkopfes (10) abzulesen, bis der abgelesene Wert des wenigstens einen Fahrwerksparameters mit einem vorgegebenen Sollwert übereinstimmt.

## Claims

1. A measuring head (10) for vehicle wheel alignment measurement, in particular for wheel alignment measurement of a motor vehicle (6),
wherein the measuring head (10) is designed to be arranged in an approximately central position with respect to the longitudinal direction of a motor vehicle (6) to be measured, laterally beside the motor vehicle (6) to be measured, and comprises:
at least one rearwardly directed image recording device (12a) which is designed to record images of at least one measuring panel (8a) attached to a rear wheel (7a) of the motor vehicle (6) to be measured, wherein a viewing direction (B) of the at least one rearwardly directed image recording device (12a) is directed towards a measuring panel (8a) attached to a rear wheel (7a) of the motor vehicle (6) to be measured when the measuring head (10) is arranged beside the motor vehicle (6) to be measured in a position and orientation suitable for vehicle wheel alignment measurement;
at least one front image recording device (12b) which is designed to record images of at least one measuring panel (8b) attached to a front wheel (7b) of the motor vehicle (6) to be measured, wherein a viewing direction (B) of the at least one front image recording device (12b) is directed towards a measuring panel (8b) attached to a front wheel (7b) of the motor vehicle (6) to be measured when the measuring head (10) is arranged beside the motor vehicle (6) to be measured in the position and orientation suitable for vehicle wheel alignment measurement; and
at least one display device (22) integrated in the measuring head (10), which is designed to display current measurement data of the measuring head (10) and/or instructions to a user of the measuring head (10) as graphics and/or alphanumeric characters;
wherein the at least one display device (22) is formed on or in a side surface (11b, 11c) of the measuring head (10), the surface normal (N) of which is aligned substantially parallel to the viewing direction (B) of one of the image recording devices (12a, 12b).

2. The measuring head (10) according to claim 1,
wherein the side surface (11b, 11c) is aligned such that the surface normal (N) of the side surface (11b, 11c) is rotated by an angle (α) between 0° and 15° relative to the viewing direction (B) of the image recording device (12a, 12b) in the direction of the motor vehicle (6) to be measured when the measuring head (10) is arranged beside the motor vehicle (6) to be measured in a position and orientation suitable for vehicle wheel alignment measurement.

3. The measuring head (10) according to claim 1 or 2,
wherein the at least one display device (22) comprises a first display device (22) and a second display device (22), wherein the first display device (22) is formed on or in a side surface (11c), the surface normal (N) of which is aligned with a rear wheel (7a) of the motor vehicle (6), and wherein the second display device (22) is formed on or in a side surface (11b), the surface normal (N) of which is aligned with a front wheel (7b) of the motor vehicle (6) when the measuring head (10) is arranged beside the motor vehicle (6) to be measured in a position and orientation suitable for vehicle wheel alignment measurement.

4. The measuring head (10) according to any of the preceding claims, wherein the side surface (11b, 11c), on or in which the at least one display device (22) is formed, is inclined upwards about a horizontal axis (H).

5. The measuring head (10) according to claim 4,
wherein the side surface (11b, 11c) is inclined upwards from a vertical orientation at an angle between 0° and 15°.

6. The measuring head (10) according to any of the preceding claims, wherein the at least one display device (22) has a resolution of at least 50 by 25 pixels, in particular a resolution of at least 100 by 50 pixels, and wherein the at least one display device (22) is designed as a monochrome or as a multi-colour display device (22).

7. The measuring head (10) according to any of the preceding claims, wherein the at least one display device (22) comprises at least one OLED display element.

8. The measuring head (10) according to any of the preceding claims, wherein the at least one display device (22) is integrated into the side surface (11b, 11 c) of the measuring head (10) in such a way that the at least one display device (22) does not protrude from the side surface (11b, 11c) of the measuring head (10) and does not protrude beyond the side surface (11b, 11c) of the measuring head (10).

9. The measuring head (10) according to claim 8,
wherein the at least one display device (22) is formed planar or set back in the side surface (11b, 11c) of the measuring head (10).

10. The measuring head (10) according to any of the preceding claims, wherein the measuring head (10) comprises a mechanical protective device (30) which is designed to protect the at least one display device (22) from external mechanical influences, in particular from impacts.

11. The measuring head (10) according to claim 10,
wherein the protective device (30) is designed as a frame extending at least partially around the at least one display device (22) and/or as a protective housing (28, 30, 40) at least partially enclosing the measuring head (10).

12. A measuring site (1) or lifting platform (2) for vehicle wheel alignment measurement, comprising at least one running rail (4a, 4b) for accommodating a motor vehicle (6) to be measured, at least one measuring head (10) according to any of claims 1 to 11 and a holding device (14) which is formed on the at least one running rail (4a, 4b) and is designed to support the at least one measuring head (10),
wherein the at least one measuring head (10) and the holding device (14) are designed such that the at least one display device (22) of the at least one measuring head (10) can be read from a position on a wheel (7a, 7b) or below the motor vehicle (6) to be measured when the at least one measuring head (10) is arranged in the holding device (14) and the motor vehicle (6) to be measured is positioned on the at least one running rail (4a, 4b) in a position suitable for vehicle wheel alignment measurement.

13. The measuring site (1) or lifting platform (2) according to claim 12,
wherein the side surface (11b, 11c) of the at least one measuring head (10), on which the at least one display device (22) is formed, is formed on an inner measuring head portion (10a) facing the motor vehicle (6) to be measured, and wherein the side surface (11b, 11c) is aligned obliquely to a longitudinal center plane (L) of the motor vehicle (6) to be measured when the motor vehicle (6) to be measured is positioned on the at least one running rail (4a, 4b) in a position suitable for vehicle wheel alignment measurement.

14. A method of measuring a motor vehicle (6) with at least one measuring head (10) according to any of claims 1 to 11,
the method comprising:
arranging the at least one measuring head (10) on the motor vehicle (6) to be measured, in a position suitable for measuring the motor vehicle (6);
activating the at least one measuring head (10) for vehicle wheel alignment measurement; and
reading measurement data of the measuring head (10) and/or instructions to a user from the at least one display device (22) of the at least one measuring head (10) from a position below the motor vehicle (6).

15. A method of adjusting at least one wheel alignment parameter of a motor vehicle (6), the method comprising:
measuring the motor vehicle (6) using a method according to claim 14 and reading the value of the at least one wheel alignment parameter on the at least one display device (22); and
changing the at least one wheel alignment parameter from a position on a wheel (7a, 7b) or below the motor vehicle (6) and reading the changing value of the at least one wheel alignment parameter on the at least one display device (22) of the at least one measuring head (10) until the read value of the at least one wheel alignment parameter corresponds to a predetermined nominal value.

## Revendications

1. Tête de mesure (10) pour la mesure de véhicule, en particulier pour la mesure du train roulant d'un véhicule automobile (6),
la tête de mesure (10) étant réalisée de manière à être disposée dans une position à peu près centrale par rapport à la direction longitudinale d'un véhicule automobile (6) à mesurer, latéralement à côté du véhicule automobile (6) à mesurer, et présentant :
au moins un dispositif de prise de vue (12a) orienté vers l'arrière, qui est réalisé de manière à prendre des images d'au moins un panneau de mesure (8a) monté sur une roue arrière (7a) du véhicule automobile (6) à mesurer, une direction d'observation (B) du dispositif de prise de vue (12a) orienté vers l'arrière, un au moins, étant dirigée vers un panneau de mesure (8a) monté sur une roue arrière (7a) du véhicule automobile (6) à mesurer, lorsque la tête de mesure (10) est disposée à côté du véhicule automobile (6) à mesurer dans une position et une orientation appropriées pour la mesure du véhicule ;
au moins un dispositif de prise de vue avant (12b), qui est réalisé de manière à prendre des images d'au moins un panneau de mesure (8b) monté sur une roue avant (7b) du véhicule automobile (6) à mesurer, une direction d'observation (B) du dispositif de prise de vue avant (12b), un au moins, étant dirigée vers un panneau de mesure (8b) monté sur une roue avant (7b) du véhicule automobile (6) à mesurer, lorsque la tête de mesure (10) est disposée à côté du véhicule automobile (6) à mesurer dans la position et l'orientation appropriées pour la mesure du véhicule (6) ; et
au moins un dispositif d'affichage (22) intégré à la tête de mesure (10) qui est réalisé de manière à afficher des données de mesure actuelles de la tête de mesure (10) et/ou des instructions à un utilisateur de la tête de mesure (10) sous forme de graphiques et/ou de caractères alphanumériques ;
le dispositif d'affichage (22), un au moins, étant réalisé sur ou dans une surface latérale (11b, 11c) de la tête de mesure (10), dont la normale à la surface (N) est orientée sensiblement parallèlement à la direction d'observation (B) de l'un des dispositifs de prise de vue (12a, 12b).

2. La tête de mesure (10) selon la revendication 1, dans laquelle la surface latérale (11b, 11c) est orientée de telle sorte que la normale à la surface (N) de la surface latérale (11b, 11c) est tournée selon un angle (α) compris entre 0° et 15° par rapport à la direction d'observation (B) du dispositif de prise de vue (12a, 12b) dans la direction du véhicule automobile (6) à mesurer, lorsque la tête de mesure (10) est disposée à côté du véhicule automobile (6) à mesurer dans la position et l'orientation appropriées pour la mesure du véhicule.

3. La tête de mesure (10) selon la revendication 1 ou 2, dans laquelle le dispositif d'affichage (22) comprend un premier dispositif d'affichage (22) et un deuxième dispositif d'affichage (22), le premier dispositif d'affichage (22) étant réalisé sur ou dans une surface latérale (11c) dont la normale à la surface (N) est orientée sur une roue arrière (7a) du véhicule automobile (6), et le deuxième dispositif d'affichage (22) étant réalisé sur ou dans une surface latérale (11b) dont la normale à la surface (N) est orientée sur une roue avant (7b) du véhicule automobile (6), lorsque la tête de mesure (10) est disposée à côté du véhicule automobile (6) à mesurer dans la position et l'orientation appropriées pour la mesure du véhicule.

4. La tête de mesure (10) selon l'une quelconque des revendications précédentes, dans laquelle la surface latérale (11b, 11c), sur ou dans laquelle est réalisé le dispositif d'affichage (22), un au moins, est inclinée vers le haut autour d'un axe horizontal (H).

5. La tête de mesure (10) selon la revendication 4, dans laquelle la surface latérale (11b, 11c) est inclinée vers le haut depuis une orientation verticale selon un angle compris entre 0° et 15°.

6. La tête de mesure (10) selon l'une quelconque des revendications précédentes, dans laquelle le dispositif d'affichage (22), un au moins, présente une résolution d'au moins 50 par 25 pixels, en particulier une résolution d'au moins 100 par 50 pixels, et où le dispositif d'affichage (22), un au moins, est réalisé en tant que dispositif d'affichage (22) monochrome ou multicolore.

7. La tête de mesure (10) selon l'une quelconque des revendications précédentes, dans laquelle le dispositif d'affichage (22), un au moins, comprend au moins un élément d'affichage OLED.

8. La tête de mesure (10) selon l'une quelconque des revendications précédentes, dans laquelle le dispositif d'affichage (22), un au moins, est intégré de telle sorte dans la surface latérale (11b, 11c) de la tête de mesure (10) que le dispositif d'affichage (22), un au moins, ne fait pas saillie de la surface latérale (11b, 11c) de la tête de mesure (10) ni ne dépasse de la surface latérale (11b, 11c) de la tête de mesure (10).

9. La tête de mesure (10) selon la revendication 8, dans laquelle le dispositif d'affichage (22), un au moins, est réalisé plan ou en retrait dans la surface latérale (11b, 11c) de la tête de mesure (10).

10. La tête de mesure (10) selon l'une quelconque des revendications précédentes, dans laquelle la tête de mesure (10) présente un dispositif de protection mécanique (30) configuré pour protéger le dispositif d'affichage (22), un au moins, des influences mécaniques extérieures, notamment des chocs.

11. La tête de mesure (10) selon la revendication 10, dans laquelle le dispositif de protection (30) est réalisé sous la forme d'un cadre s'étendant au moins partiellement autour du dispositif d'affichage (22), un au moins, et/ou sous la forme d'un boîtier de protection (28, 30, 40) entourant au moins partiellement la tête de mesure (10).

12. Poste de mesure (1) ou pont élévateur (2) pour la mesure de véhicules automobiles, comprenant au moins un rail de roulement (4a, 4b) destiné à recevoir un véhicule automobile (6) à mesurer, au moins une tête de mesure (10) selon l'une quelconque des revendications 1 à 11 et un dispositif de support (14) formé sur le rail de roulement (4a, 4b), un au moins, réalisé de manière à soutenir la tête de mesure (10), une au moins,
dans lequel la tête de mesure (10), une au moins, et le dispositif de support (14) sont réalisés de telle sorte que le dispositif d'affichage (22), un au moins, de la tête de mesure (10), une au moins, peut être lu depuis une position sur une roue (7a, 7b) ou en dessous du véhicule automobile (6) à mesurer, lorsque la tête de mesure (10), une au moins, est disposée dans le dispositif de support (14) et que le véhicule automobile (6) à mesurer est positionné sur le rail de roulement (4a, 4b), un au moins, dans une position appropriée pour la mesure du véhicule.

13. Le poste de mesure (1) ou le pont élévateur (2) selon la revendication 12, dans lequel la surface latérale (11b, 11c) de la tête de mesure (10), une au moins, sur laquelle est réalisé le dispositif d'affichage (22), un au moins, est réalisée sur une zone intérieure de la tête de mesure (10a) tournée vers le véhicule automobile (6) à mesurer et dans lequel la surface latérale (11b, 11c) est orientée obliquement par rapport à un plan médian longitudinal (L) du véhicule automobile (6) à mesurer, lorsque le véhicule automobile (6) à mesurer est positionné sur le rail de roulement (4a, 4b), un au moins, dans une position appropriée pour la mesure du véhicule.

14. Procédé de mesure d'un véhicule automobile (6) avec au moins une tête de mesure (10) selon l'une quelconque des revendications 1 à 11, le procédé impliquant de
disposer la tête de mesure (10), une au moins, dans une position appropriée au niveau du véhicule automobile (6) à mesurer afin de mesurer le véhicule automobile (6) ;
activer la tête de mesure (10), une au moins, pour la mesure du véhicule automobile ; et
lire les données de mesure de la tête de mesure (10) et/ou les instructions à un utilisateur du dispositif d'affichage (22), un au moins, de la tête de mesure (10), une au moins, depuis une position située en dessous du véhicule automobile (6).

15. Procédé de réglage d'au moins un paramètre de train roulant d'un véhicule automobile (6), le procédé impliquant de
mesurer le véhicule automobile (6) par un procédé selon la revendication 14 et de lire la valeur du paramètre de train roulant, un au moins, sur le dispositif d'affichage (22), un au moins ; ainsi que de
modifier le paramètre de train roulant, un au moins, depuis une position sur une roue (7a, 7b) ou en dessous du véhicule automobile (6), et de lire la valeur se modifiant du paramètre de train roulant, un au moins, sur le dispositif d'affichage (22), un au moins, de la tête de mesure (10), une au moins, jusqu'à ce que la valeur lue du paramètre de train roulant, un au moins, concorde avec une valeur de consigne prédéfinie.
